# EUROPEAN PATENT SPECIFICATION

(11) **EP 3 798 107 B1**
(45) Date of publication and mention of the grant of the patent: **23.02.2022**
(21) Application number: 19200441.4
(22) Date of filing: 30.09.2019
(51) Int. Cl.: B62D 55/20, B62D 55/26, B62D 55/275, B62D 55/04

(54) **TRACK SECTION WITH CROSSBAR AND TRACK BELT FORMED BY SUCH TRACK SECTIONS**
TRAKTIONSABSCHNITT MIT QUERTRÄGER UND DURCH SOLCHE TRAKTIONSABSCHNITTE GEBILDETES TRAKTIONSBAND
SECTION DE PISTE À BARRE TRANSVERSALE ET COURROIE DE CHENILLE FORMÉE PAR DE TELLES SECTIONS DE PISTE

(43) Date of publication of application: 31.03.2021
(73) Proprietor: Olofsfors AB, 914 91 Nordmaling (SE)
(72) Inventor: Torfve Sandgren, Christoffer, 903 45 Umeå (SE)
(74) Representative: Bjerkéns Patentbyrå KB (Gävle)

(56) References cited:
- DE-U1-202014 103 179
- US-A- 4 099 794
- US-A1- 2019 184 778

## Description

### FIELD OF THE INVENTION AND PRIOR ART

The present invention relates to a track section according to the preamble of claim 1, which is adapted to be linked to a plurality of similar track sections to form a track belt for mounting around the outer periphery of vehicle tyres. The invention also relates to a track belt formed by several such track sections.

Track belts which may be removably mounted around tyres on vehicle wheels are known in several different designs. Such a track belt can be used in order to obtain better friction and traction between the vehicle tyres and the ground for a vehicle, particularly on wet, slippery or muddy terrain, or in order to increase the carrying capacity of a vehicle.

A track section according to the preamble of claim 1 is previously known from US4099794 A1. Further prior art track sections are known from DE202014103179 U1, US2019/184778 A1, WO 99/37525 A1 and WO 2011/142701 A1.

### OBJECT OF THE INVENTION

The object of the present invention is to provide a track section of the above-mentioned type having a new and favourable design.

### SUMMARY OF THE INVENTION

According to the invention, said object is achieved by means of a track section having the features defined in claim 1.

The track section according to the invention comprises:
- an elongated crossbar having a tyre-facing inner side and a ground engageable outer side opposite to the inner side;
- a first lateral support member mounted to the crossbar at first end section thereof; and
- a second lateral support member mounted to the crossbar at an opposite second end section thereof.

The first and second lateral support members protrude on the inner side of the crossbar and are spaced apart to allow a tyre to be received between the first and second lateral support members with the crossbar extending across and being in contact with the envelope surface of the tyre. According to the invention, the crossbar is lattice-like and formed by two or more flat, upright and elongated crossbar elements and two or more connecting elements, wherein each crossbar element has a longitudinal inner edge on the inner side of the crossbar and a longitudinal outer edge on the outer side of the crossbar. The crossbar elements extend in parallel with each other in the longitudinal direction of the crossbar and are spaced apart in the cross-direction of the crossbar, wherein empty spaces are provided between the crossbar elements. The connecting elements are arranged at a distance from each other in the longitudinal direction of the crossbar, wherein each connecting element extends across and is fixed to the crossbar elements in order to act as a spacer between the crossbar elements and is configured to project from the crossbar elements on the outer side of the crossbar.

The above-mentioned lattice-like design of the crossbar makes it possible to produce this crossbar with a smaller amount of material as compared to a conventionally designed crossbar for a track section of the corresponding size and strength, which in its turn implies that the weight of the track section may be reduced. The track section according to the present invention is particularly intended to be included in a track belt for use on rather soft ground. The outer edges of the crossbar elements will cut into the ground when the crossbar is pressed against such rather soft ground, which will give excellent grip between the crossbar and the ground, whereas the empty spaces between the crossbar elements will let through loose material from the ground, for instance in the form of snow, ice or gravel, which will prevent such material from being squeezed between the tyre and the crossbar and being accumulated on the inner side of the crossbar. With crossbars of conventional design, such loose material from the ground may accumulate on the inner side of the crossbars, which in its turn may cause damages to the bogie of the vehicle. The risk for damages to the bogie due to accumulation of material on the inner side of the crossbar is consequently avoided with the track section according to the present invention.

The connecting elements stabilize the crossbar and make sure that the crossbar elements are kept in position in relation to each other. By projecting from the crossbar elements on the outer side of the crossbar, the connecting elements will be in contact with the ground when the crossbar is pressed against the ground. Thus, the connecting elements will also improve the grip between the crossbar and the ground.

According to an embodiment of the invention, the outer edge of at least one of the crossbar elements, preferably of each crossbar element, is toothed over at least one part of its longitudinal extension. This toothing will improve the grip between the crossbar elements and the ground.

According to another embodiment of the invention, said toothed outer edge comprises two toothed edge sections and an intermediate non-toothed edge section, wherein the toothed edge sections are spaced apart in the longitudinal direction of the associated crossbar element and separated from each other by the intermediate non-toothed edge section, which is located in the middle of the associated crossbar element, as seen in the longitudinal direction thereof. Each crossbar element is subjected to the highest stress at its middle. Furthermore, there is a risk for stress concentration in the areas immediately adjacent to each tooth of a toothed edge section. By having a non-toothed edge section at the middle of the crossbar element there is no risk for stress concentration at the middle of the crossbar element where the stress is at its highest, which in its turn will reduce the risk for breakage of the crossbar element.

According to another embodiment of the invention, each connecting element is flat and fixed to the crossbar elements in an upright position, wherein each connecting element has an inner edge facing the crossbar elements and an opposite outer edge. Hereby, the outer edges of the connecting elements will cut into the ground when the crossbar is pressed against the ground, which is favourable with respect to the grip between the crossbar and the ground.

According to another embodiment of the invention, the outer edge of each connecting element is toothed. This toothing will improve the grip between the connecting elements and the ground.

Further advantageous features of the track section according to the present invention will appear from the description following below and the dependent claims.

The invention also relates to a track belt having the features defined in claim 15.

### BRIEF DESCRIPTION OF THE DRAWING

With reference to the appended drawing, a specific description of embodiments of the invention cited as examples follows below. In the drawings:
- Fig 1: is a perspective view of a track section according to an embodiment of the present invention,
- Fig 2: is a perspective view from another direction of the track section of Fig 1,
- Fig 3: is a lateral view of the track section of Fig 1,
- Fig 4: is a planar view of the track section of Fig 1,
- Fig 5: is a front view of the track section of Fig 1,
- Fig 6: is a perspective view of a track belt formed by interconnected track sections of the type illustrated in Figs 1-5, with the track belt mounted around the outer periphery of two vehicle tyres,
- Fig 7: is a lateral view of the track belt and the vehicle tyres of Fig 6, and
- Fig 8: is a planar view of the track belt and the vehicle tyres of Fig 6.

### DETAILED DESCRIPTION OF EMBODIMENTS OF THE INVENTION

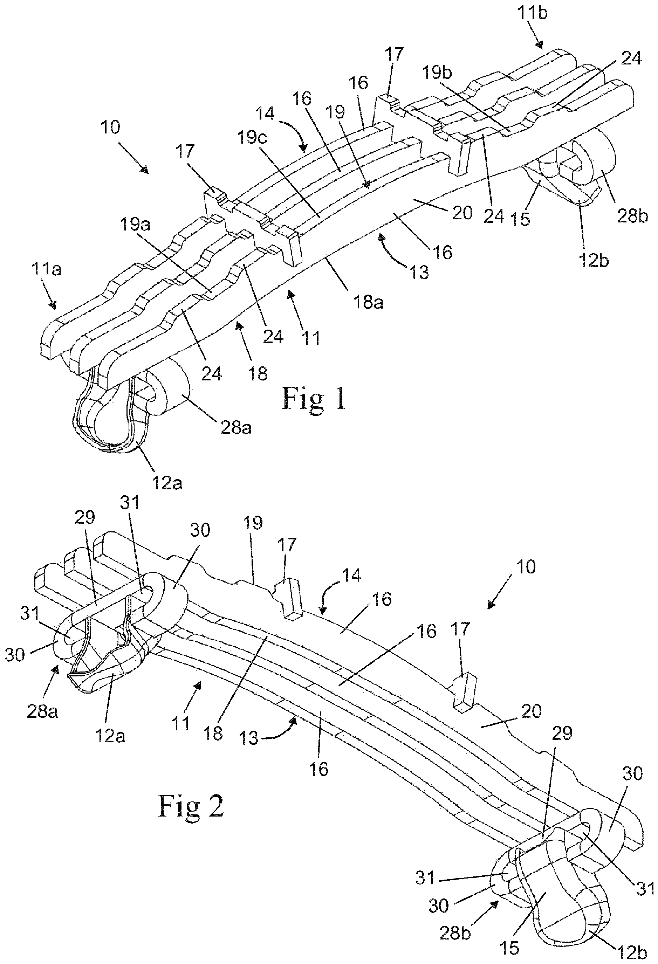

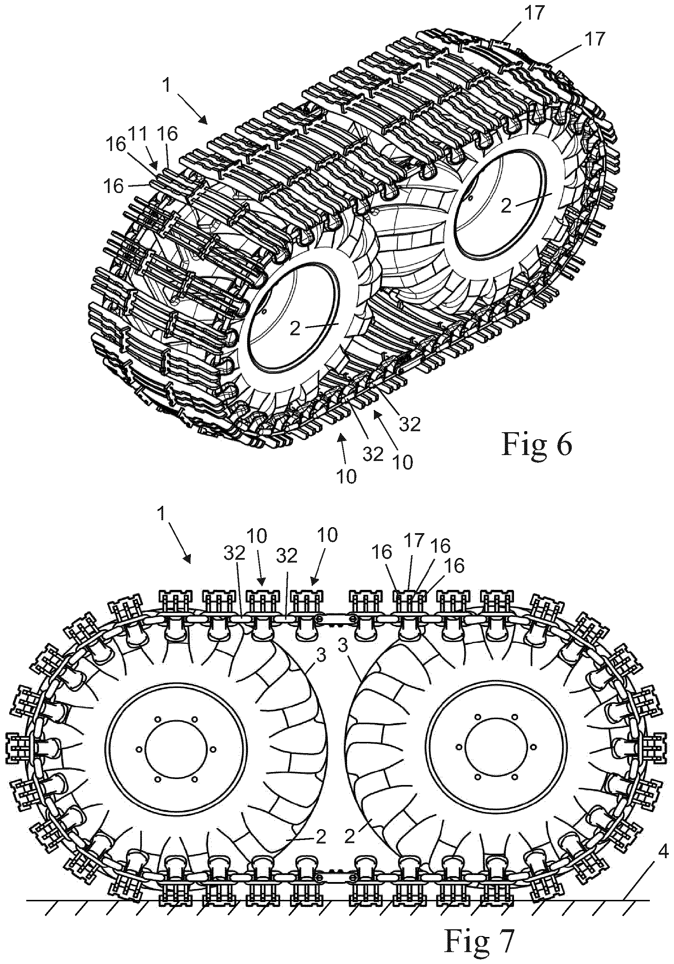

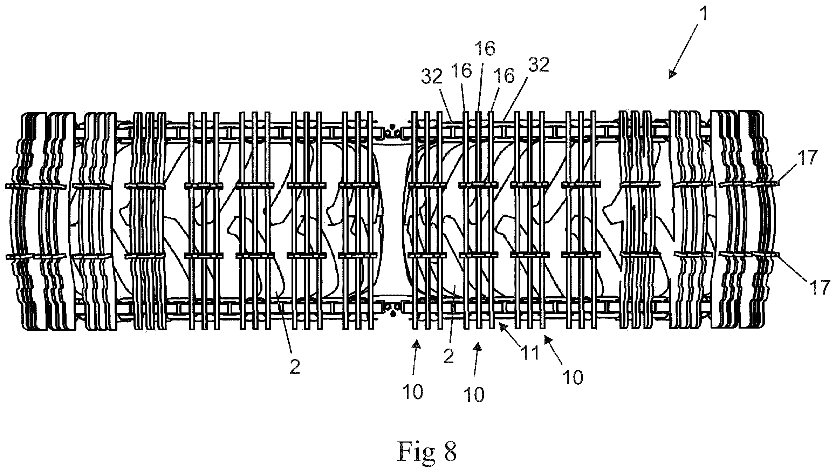

A track section 10 according to an embodiment of the present invention is illustrated in Figs 1-5. This track section 10 is to be linked to a plurality of similar track sections to form a flexible track belt 1 (see Figs 6-8) for mounting around the outer periphery of vehicle tyres 2. The track section 10 comprises an elongated crossbar 11 and two lateral support members 12a, 12b mounted to the crossbar 11 at opposite end sections 11a, 11b thereof. The crossbar 11 has a tyre-facing inner side 13 and an opposite outer side 14. Thus, said inner side 13 is configured for engagement with the envelope surface 3 of a vehicle tyre 2, whereas said outer side 14 is configured for engagement with the ground 4.

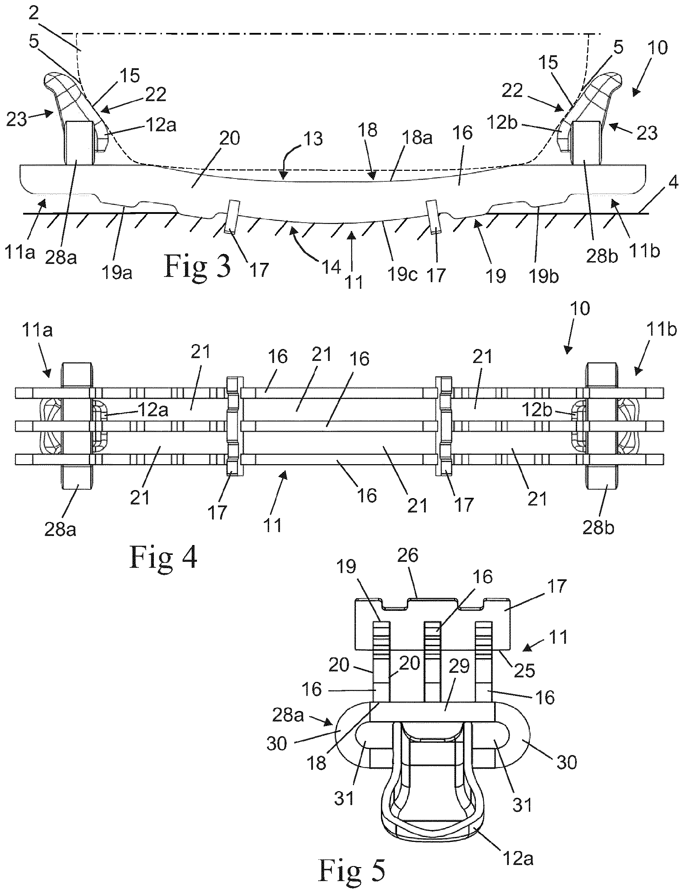

The lateral support members 12a, 12b protrude on the inner side 13 of the crossbar 11. The lateral support members 12a, 12b are spaced apart in the longitudinal direction of the crossbar 11 to allow a tyre 2 of a vehicle wheel to be received between the lateral support members 12a, 12b with the crossbar 11 extending across and being in contact with the envelope surface 3 of the tyre 2 and with the lateral support members 12a, 12b facing a respective one of the two opposed sidewalls 5 of the tyre, as illustrated in Fig 3, where the lower part of a tyre 2 is schematically illustrated in broken lines. Each lateral support member 12a, 12b has a first side 22 (see Fig 3) facing the other lateral support member and an opposite second side 23 facing away from the other lateral support member. A contact surface 15 is provided on said first side 22 of each lateral support member for engagement with the outer surface of a tyre 2 received between the lateral support members 12a, 12b. In the illustrated embodiment, the lateral support members 12a, 12b are designed in the manner described in closer detail in WO 2011/142701 A1. However, the lateral support members 12a, 12b may as an alternative have any other suitable design.

The crossbar 11 has a lattice-shaped design and it is formed by two or more flat and elongated crossbar elements 16 and two or more connecting elements 17. In the illustrated embodiment, the crossbar 11 consists of three crossbar elements 16 and two connecting elements 17.

Each crossbar element 16 has a longitudinal inner edge 18 on the inner side 13 of the crossbar and a longitudinal outer edge 19 on the outer side 14 of the crossbar. Each crossbar element 16 has a flat lateral surface 20 which extends between the inner and outer edges 18, 19 on a first side of the crossbar element and another flat lateral surface 20 which extends between the inner and outer edges 18, 19 on an opposite second side of the crossbar element. The crossbar elements 16 are arranged next to each other in an upright position and they extend in parallel with each other in the longitudinal direction of the crossbar 11 and are spaced apart as seen in the cross-direction of the crossbar, wherein empty spaces 21 (see Fig 4) are provided between the crossbar elements 16. Thus, the crossbar elements 16 are so arranged that at least one of the lateral surfaces 20 of each crossbar element faces and is arranged at a distance from a lateral surface 20 of an adjacent crossbar element. Each crossbar element 16 preferably has a material thickness of 12-20 mm.

The inner edge 18 of each crossbar element 16 may have a concave edge section 18a at its middle in order to conform to the shape of the envelop surface 3 of a tyre 2 received between the lateral support members 12a, 12b.

In the illustrated embodiment, the outer edge 19 of each crossbar element 16 comprises two toothed edge sections 19a, 19b in order to improve the grip against the ground. The toothed edge sections 19a, 19b are spaced apart as seen in the longitudinal direction of the associated crossbar element 16 and are separated from each other by an intermediate non-toothed edge section 19c. The non-toothed edge section 19c is preferably convex and it is located in the middle of the associated crossbar element 16, as seen in the longitudinal direction thereof. In the illustrated example, each one of said toothed edge sections 19a, 19b is provided with two teeth 24. As an alternative, each toothed edge section 19a, 19b may be provided with only one tooth or more than two teeth.

The connecting elements 17 are spaced apart in the longitudinal direction of the crossbar 11 and extend across the crossbar elements 16. Each connecting element 17 projects from the crossbar elements 16 on the outer side 14 of the crossbar 11 and is fixed to the crossbar elements 16 in order to act as a spacer between the crossbar elements. In the illustrated embodiment, the connecting elements 17 are fixed to the crossbar elements 16 at the opposite ends of the above-mentioned non-toothed edge section 19c on each crossbar element. The connecting elements 17 are fixed to the crossbar elements 16 by welding.

Each connecting element 17 is preferably flat and fixed to the crossbar elements 16 in an upright position, wherein each connecting element 17 has an inner edge 25 (see Fig 5) facing the crossbar elements 16 and an opposite outer edge 26. In the illustrated embodiment, the outer edge 26 of each connecting element 17 is toothed in order to improve the grip against the ground. Each connecting element 17 preferably has a material thickness of 12-20 mm.

The length of the crossbar 11 is preferably between 600 and 1400 mm and the width of the crossbar 11 is preferably between 100 and 200 mm. The crossbar 11 is made of steel.

In the illustrated embodiment, a first one 12a of the lateral support members is mounted to a first end section 11a of the crossbar 11 through a C-shaped first connection member 28a in the form of a so-called link hook, and the other lateral support member 12b, in the following referred to as the second lateral support member, is mounted to a second end section 11b of the crossbar 11 through a C-shaped second connection member 28b in the form of a link hook. Each connection member 28a, 28b has a flat base part 29 (see Figs 2 and 5) and two curved end parts 30 on opposite sides of the base part.

Each crossbar element 16 of the crossbar 11 is at a first end secured by welding to a first side of the base part 29 of the first connection member 28a and the first lateral support member 12a is secured by welding to an opposite second side of the base part 29 of the first connection member 28a. Furthermore, each crossbar element 16 is at an opposite second end secured by welding to a first side of the base part 29 of the second connection member 28b and the second lateral support member 12b is secured by welding to an opposite second side of the base part 29 of the second connection member 28b.

A first opening 31 (see Figs 2 and 5) for receiving a first link element 32 (see Fig 7) is formed on a first side of each lateral support member 12a, 12b between the associated connection member 28a, 28b and a first lateral wall of the lateral support member 12a, 12b and a second opening 31 for receiving a second link element 32 is formed on the opposite side of each lateral support member 12a, 12b between the associated connection member 28a, 28b and a second lateral wall of the support member 12a, 12b.

Several track sections 10 of the type described above are interconnected by means of link elements 32 to form a flexible track belt 1, as illustrated in Figs 6-8. Each link element 32 is received in an opening 31 of one of the connection members 28a, 28b of a first track section 10 and in an opening 31 of one of the connection members 28a, 28b of another adjacent track section 10. The link elements 32 will act as hinges between the track sections 10. The track section 1 is mounted around the outer periphery of two or more vehicle tyres 2 with the crossbars 11 extending in the cross-direction of the tyres and with the lateral support members 12a, 12b facing the tyres. The lateral support members 12a, 12b will keep the track belt 1 correctly positioned on the tyres 2 and will prevent the track belt 1 from slipping off the tyres 2. At the part of a tyre 2 where the tyre bears against the ground 4, the sidewalls 5 of the tyre will bulge due to the load from the vehicle and the sidewalls 5 will thereby come into contact with the two opposed lateral support members 12a, 12b of a track section 10 received between the tyre 2 and the ground 4, as illustrated in Fig 3.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A track section adapted to be linked to a plurality of similar track sections to form a track belt (1) for mounting around the outer periphery of vehicle tyres, wherein the track section (10) comprises:
- an elongated crossbar (11) having a tyre-facing inner side (13) and a ground engageable outer side (14) opposite to the inner side;
- a first lateral support member (12a) mounted to the crossbar (11) at first end section (11a) thereof; and
- a second lateral support member (12b) mounted to the crossbar (11) at an opposite second end section (11b) thereof,
wherein the first and second lateral support members (12a, 12b) protrude on the inner side (13) of the crossbar (11) and are spaced apart to allow a tyre (2) to be received between the first and second lateral support members (12a, 12b) with the crossbar (11) extending across and being in contact with the envelope surface (3) of the tyre, the crossbar (11) is lattice-like and is formed by two or more flat, upright and elongated crossbar elements (16) and two or more connecting elements (17), wherein each crossbar element (16) has a longitudinal inner edge (18) on the inner side (13) of the crossbar and a longitudinal outer edge (19) on the outer side (14) of the crossbar;
the crossbar elements (16) extend in parallel with each other in the longitudinal direction of the crossbar (11) and are spaced apart in the cross-direction of the crossbar, wherein empty spaces (21) are provided between the crossbar elements (16);
the connecting elements (17) are arranged at a distance from each other in the longitudinal direction of the crossbar (11), wherein each connecting element (17) extends across and is fixed to the crossbar elements (16) in order to act as a spacer between the crossbar elements; and
being **characterized in that** each connecting element (17) is configured to project from the crossbar elements (16) on the outer side (14) of the crossbar (11).

2. A track section according to claim 1, **characterized in that** the outer edge (19) of at least one of the crossbar elements (16), preferably of each crossbar element, is toothed over at least one part of its longitudinal extension.

3. A track section according to claim 2, **characterized in that** said toothed outer edge (19) comprises two toothed edge sections (19a, 19b) and an intermediate non-toothed edge section (19c), wherein the toothed edge sections (19a, 19b) are spaced apart in the longitudinal direction of the associated crossbar element (16) and separated from each other by the intermediate non-toothed edge section (19c), which is located in the middle of the associated crossbar element (16), as seen in the longitudinal direction thereof.

4. A track section according to claim 3, **characterized in that** each one of said toothed edge sections (19a, 19b) is provided with at least two teeth (24).

5. A track section according to claim 3 or 4, **characterized in that** said intermediate non-toothed edge section (19c) is convex.

6. A track section according to any of claims 1-5, **characterized in that** each connecting element (17) is flat and fixed to the crossbar elements (16) in an upright position, wherein each connecting element (17) has an inner edge (25) facing the crossbar elements (16) and a opposite outer edge (26).

7. A track section according to claim 6, **characterized in that** the outer edge (26) of each connecting element (17) is toothed.

8. A track section according to any of claims 1-7, **characterized in that** the inner edge (18) of each crossbar element (16) has a concave edge section (18a) at its middle.

9. A track section according to any of claims 1-8, **characterized in that** the crossbar (11) comprises three such crossbar elements (16).

10. A track section according to any of claims 1-9, **characterized in that** the connecting elements (17) are fixed to the crossbar elements (16) by welding.

11. A track section according to any of claims 1-10, **characterized in that** each crossbar element (16) has a thickness of 12-20 mm.

12. A track section according to any of claims 1-11, **characterized in that** each connecting element (17) has a thickness of 12-20 mm.

13. A track section according to any of claims 1-12, **characterized in:**
- **that** the first lateral support member (12a) is mounted to the first end section (11a) of the crossbar (11) through a C-shaped first connection member (28a), which has a flat base part (29), wherein each crossbar element (16) at a first end is secured by welding to a first side of the base part (29) of the first connection member (28a) and wherein the first lateral support member (12a) is secured by welding to an opposite second side of the base part (29) of the first connection member (28a); and
- **that** the second lateral support member (12b) is mounted to the second end section (11b) of the crossbar (11) through a C-shaped second connection member (28b), which has a flat base part (29), wherein each crossbar element (16) at a second end is secured by welding to a first side of the base part (29) of the second connection member (28b) and wherein the second lateral support member (12b) is secured by welding to an opposite second side of the base part (29) of the second connection member (28b).

14. A track section according to any of claims 1-13, **characterized in that** the crossbar (11) has a length of 600-1400 mm.

15. A track belt for mounting around the outer periphery of vehicle tyres, **characterized in that** the track belt (1) is formed by several track sections (10) according to any of claims 1-14 connected to each other by means of link elements (32).

## Patentansprüche

1. Raupenkettenabschnitt, der dafür ausgelegt ist, mit einer Vielzahl von ähnlichen Raupenkettenabschnitten gekoppelt zu werden, um ein Raupenkettenband (1) zur Montage um die Außenperipherie von Fahrzeugreifen zu bilden, wobei der Raupenkettenabschnitt (10) Folgendes umfasst:
- einen länglichen Querträger (11), der eine dem Reifen zugewandte Innenseite (13) und eine mit dem Boden in Eingriff bringbare Außenseite (14), die entgegengesetzt zu der Innenseite ist, aufweist;
- ein erstes seitliches Stützelement (12a), das an dem Querträger (11) an einem ersten Endabschnitt (11a) davon montiert ist; und
- ein zweites seitliches Stützelement (12b), das an dem Querträger (11) an einem entgegengesetzten zweiten Endabschnitt (11b) davon montiert ist,
wobei das erste und das zweite seitliche Stützelement (12a, 12b) auf der Innenseite (13) des Querträgers (11) vorstehen und so beabstandet sind, dass sie ermöglichen, dass ein Reifen (2) zwischen dem ersten und dem zweiten seitlichen Stützelement (12a, 12b) aufgenommen werden kann, wobei sich der Querträger (11) über die Mantelfläche (3) des Reifens erstreckt und damit in Kontakt ist,
wobei der Querträger (11) gitterartig ist und aus zwei oder mehr flachen, aufrechten und länglichen Querträgerelementen (16) und zwei oder mehr Verbindungselementen (17) gebildet ist, wobei jedes Querträgerelement (16) eine längslaufende Innenkante (18) auf der Innenseite (13) des Querträgers und eine längslaufende Außenkante (19) auf der Außenseite (14) des Querträgers aufweist;
wobei sich die Querträgerelemente (16) parallel zueinander in der Längsrichtung des Querträgers (11) erstrecken und in der Querrichtung des Querträgers beabstandet sind, wobei Leerräume (21) zwischen den Querträgerelementen (16) vorgesehen sind;
wobei die Verbindungselemente (17) in einem Abstand voneinander in der Längsrichtung des Querträgers (11) angeordnet sind, wobei sich jedes Verbindungselement (17) über die Querträgerelemente (16) erstreckt und daran befestigt ist, um als ein Abstandshalter zwischen den Querträgerelementen zu fungieren; und
**dadurch gekennzeichnet, dass** jedes Verbindungselement (17) so ausgestaltet ist, dass es aus den Querträgerelementen (16) auf der Außenseite (14) des Querträgers (11) hervorragt.

2. Raupenkettenabschnitt nach Anspruch 1, **dadurch gekennzeichnet, dass** die Außenkante (19) von mindestens einem der Querträgerelemente (16), vorzugsweise von jedem Querträgerelement, über mindestens einen Teil ihrer Längserstreckung gezahnt ist.

3. Raupenkettenabschnitt nach Anspruch 2, **dadurch gekennzeichnet, dass** die gezahnte Außenkante (19) zwei gezahnte Kantenabschnitte (19a, 19b) und einen zwischengeordneten nicht gezahnten Kantenabschnitt (19c) umfasst, wobei die gezahnten Kantenabschnitte (19a, 19b) in der Längsrichtung des zugehörigen Querträgerelements (16) beabstandet sind und über den zwischengeordneten nicht gezahnten Kantenabschnitt (19c), der sich in der Mitte des zugehörigen Querträgerelements (16), bei Betrachtung in der Längsrichtung davon, befindet, voneinander getrennt sind.

4. Raupenkettenabschnitt nach Anspruch 3, **dadurch gekennzeichnet, dass** jeder der gezahnten Kantenabschnitte (19a, 19b) mit mindestens zwei Zähnen (24) versehen ist.

5. Raupenkettenabschnitt nach Anspruch 3 oder 4, **dadurch gekennzeichnet, dass** der zwischengeordnete nicht gezahnte Kantenabschnitt (19c) konvex ist.

6. Raupenkettenabschnitt nach einem der Ansprüche 1-5, **dadurch gekennzeichnet, dass** jedes Verbindungselement (17) flach ist und an den Querträgerelementen (16) in einer aufrechten Position befestigt ist, wobei jedes Verbindungselement (17) eine Innenkante (25), die den Querträgerelementen (16) zugewandt ist, und eine entgegengesetzte Außenkante (26) aufweist.

7. Raupenkettenabschnitt nach Anspruch 6, **dadurch gekennzeichnet, dass** die Außenkante (26) von jedem Verbindungselement (17) gezahnt ist.

8. Raupenkettenabschnitt nach einem der Ansprüche 1-7, **dadurch gekennzeichnet, dass** die Innenkante (18) von jedem Querträgerelement (16) einen konkaven Kantenabschnitt (18a) in ihrer Mitte aufweist.

9. Raupenkettenabschnitt nach einem der Ansprüche 1-8, **dadurch gekennzeichnet, dass** der Querträger (11) drei derartige Querträgerelemente (16) umfasst.

10. Raupenkettenabschnitt nach einem der Ansprüche 1-9, **dadurch gekennzeichnet, dass** die Verbindungselemente (17) mittels Schweißen an den Querträgerelementen (16) befestigt sind.

11. Raupenkettenabschnitt nach einem der Ansprüche 1-10, **dadurch gekennzeichnet, dass** jedes Querträgerelement (16) eine Dicke von 12-20 mm aufweist.

12. Raupenkettenabschnitt nach einem der Ansprüche 1-11, **dadurch gekennzeichnet, dass** jedes Verbindungselement (17) eine Dicke von 12-20 mm aufweist.

13. Raupenkettenabschnitt nach einem der Ansprüche 1-12, **dadurch gekennzeichnet:**
- **dass** das erste seitliche Stützelement (12a) über ein C-förmiges erstes Verbindungselement (28a), das einen flachen Basisteil (29) aufweist, an dem ersten Endabschnitt (11a) des Querträgers (11) montiert ist, wobei jedes Querträgerelement (16) an einem ersten Ende mittels Schweißen an einer ersten Seite des Basisteils (29) des ersten Verbindungselements (28a) befestigt ist, und wobei das erste seitliche Stützelement (12a) mittels Schweißen an einer entgegengesetzten zweiten Seite des Basisteils (29) des ersten Verbindungselements (28a) befestigt ist; und
- **dass** das zweite seitliche Stützelement (12b) über ein C-förmiges zweites Verbindungselement (28b), das einen flachen Basisteil (29) aufweist, an dem zweiten Endabschnitt (11b) des Querträgers (11) montiert ist, wobei jedes Querträgerelement (16) an einem zweiten Ende mittels Schweißen an einer ersten Seite des Basisteils (29) des zweiten Verbindungselements (28b) befestigt ist, und wobei das zweite seitliche Stützelement (12b) mittels Schweißen an einer entgegengesetzten zweiten Seite des Basisteils (29) des zweiten Verbindungselements (28b) befestigt ist.

14. Raupenkettenabschnitt nach einem der Ansprüche 1-13, **dadurch gekennzeichnet, dass** der Querträger (11) eine Länge von 600-1400 mm aufweist.

15. Raupenkettenband zur Montage um die Außenperipherie von Fahrzeugreifen, **dadurch gekennzeichnet, dass** das Raupenkettenband (1) aus mehreren Raupenkettenabschnitten (10) nach einem der Ansprüche 1-14 gebildet ist, die mittels Kopplungselementen (32) miteinander verbunden sind.

## Revendications

1. Section chenille apte à être reliée à une pluralité de sections chenilles similaires pour former une bande de chenille (1) à monter autour de la périphérie extérieure de pneus de véhicule, dans laquelle la section chenille (10) comprend :
- une barre transversale allongée (11) ayant un côté intérieur (13) faisant face au pneu et un côté extérieur (14) pouvant être mis en prise avec le sol à l'opposé du côté intérieur ;
- un premier élément de support latéral (12a) monté sur la barre transversale (11) à une première section d'extrémité (11a) de celle-ci ; et
- un second élément de support latéral (12b) monté sur la barre transversale (11) à une seconde section d'extrémité opposée (11b) de celle-ci,
dans laquelle les premier et second éléments de support latéraux (12a, 12b) font saillie sur le côté intérieur (13) de la barre transversale (11) et sont espacés l'un de l'autre pour permettre à un pneu (2) d'être reçu entre les premier et second éléments de support latéraux (12a, 12b) avec la barre transversale (11) s'étendant à travers et étant en contact avec la surface d'enveloppe (3) du pneu,
la barre transversale (11) est en forme de treillis et est constituée de deux éléments de barre transversale plats, verticaux et allongés (16) ou plus et de deux éléments de liaison (17) ou plus, dans laquelle chaque élément de barre transversale (16) comporte un bord intérieur longitudinal (18) sur le côté intérieur (13) de la barre transversale et un bord extérieur longitudinal (19) sur le côté extérieur (14) de la barre transversale ;
les éléments de barre transversale (16) s'étendent parallèlement l'un à l'autre dans la direction longitudinale de la barre transversale (11) et sont espacés l'un de l'autre dans la direction transversale de la barre transversale, dans laquelle des espaces vides (21) sont prévus entre les éléments de barre transversale (16) ;
les éléments de liaison (17) sont agencés à une distance l'un de l'autre dans la direction longitudinale de la barre transversale (11), dans laquelle chaque élément de liaison (17) s'étend à travers et est fixé aux éléments de barre transversale (16) pour servir d'entretoise entre les éléments de barre transversale ; et
étant **caractérisée en ce que** chaque élément de liaison (17) est configuré pour être saillant depuis les éléments de barre transversale (16) sur le côté extérieur (14) de la barre transversale (11).

2. Section chenille selon la revendication 1, **caractérisée en ce que** le bord extérieur (19) d'au moins l'un des éléments de barre transversale (16), de préférence de chaque élément de barre transversale, est denté sur au moins une partie de son extension longitudinale.

3. Section chenille selon la revendication 2, **caractérisée en ce que** ledit bord extérieur denté (19) comprend deux sections de bord dentées (19a, 19b) et une section de bord non dentée intermédiaire (19c), dans laquelle les sections de bord dentées (19a, 19b) sont espacées l'une de l'autre dans la direction longitudinale de l'élément de barre transversale (16) associé et séparées l'une de l'autre par la section de bord non dentée intermédiaire (19c), qui est située au milieu de l'élément de barre transversale (16) associé, en vue dans la direction longitudinale de celui-ci.

4. Section chenille selon la revendication 3, **caractérisée en ce que** chacune desdites sections de bord dentées (19a, 19b) est pourvue d'au moins deux dents (24).

5. Section chenille selon la revendication 3 ou 4, **caractérisée en ce que** ladite section de bord non dentée intermédiaire (19c) est convexe.

6. Section chenille selon l'une quelconque des revendications 1 - 5, **caractérisée en ce que** chaque élément de liaison (17) est plat et fixé aux éléments de barre transversale (16) dans une position verticale, dans laquelle chaque élément de liaison (17) a un bord intérieur (25) faisant face aux éléments de barre transversale (16) et un bord extérieur opposé (26).

7. Section chenille selon la revendication 6, **caractérisée en ce que** le bord extérieur (26) de chaque élément de liaison (17) est denté.

8. Section chenille selon l'une quelconque des revendications 1 - 7, **caractérisée en ce que** le bord intérieur (18) de chaque élément de barre transversale (16) a une section de bord concave (18a) à son milieu.

9. Section chenille selon l'une quelconque des revendications 1 - 8, **caractérisée en ce que** la barre transversale (11) comprend trois desdits éléments de barre transversale (16).

10. Section chenille selon l'une quelconque des revendications 1 - 9, **caractérisée en ce que** les éléments de liaison (17) sont fixés aux éléments de barre transversale (16) par soudage.

11. Section chenille selon l'une quelconque des revendications 1 - 10, **caractérisée en ce que** chaque élément de barre transversale (16) présente une épaisseur de 12 - 20 mm.

12. Section chenille selon l'une quelconque des revendications 1 - 11, **caractérisée en ce que** chaque élément de liaison (17) présente une épaisseur de 12 - 20 mm.

13. Section chenille selon l'une quelconque des revendications 1 - 12, **caractérisée en ce que** :
- le premier élément de support latéral (12a) est monté sur la première section d'extrémité (11a) de la barre transversale (11) à travers un premier élément de liaison en forme de C (28a), qui comporte une partie de base plate (29), dans laquelle chaque élément de barre transversale (16) à une première extrémité est fixé par soudage à un premier côté de la partie de base (29) du premier élément de liaison (28a) et dans laquelle le premier élément de support latéral (12a) est fixé par soudage à un second côté opposé de la partie de base (29) du premier élément de liaison (28a) ; et
- le second élément de support latéral (12b) est monté sur la seconde section d'extrémité (11b) de la barre transversale (11) à travers un second élément de liaison en forme de C (28b), qui comporte une partie de base plate (29), dans laquelle chaque élément de barre transversale (16) à une seconde extrémité est fixé par soudage à un premier côté de la partie de base (29) du second élément de liaison (28b) et dans laquelle le second élément de support latéral (12b) est fixé par soudage à un second côté opposé de la partie de base (29) du second élément de liaison (28b).

14. Section chenille selon l'une quelconque des revendications 1 - 13, **caractérisée en ce que** la barre transversale (11) présente une longueur de 600 - 1400 mm.

15. Bande de chenille à monter autour de la périphérie extérieure de pneus de véhicule, **caractérisé en ce que** la bande de chenille (1) est constituée de plusieurs sections chenilles (10) selon l'une quelconque des revendications 1 - 14 reliées l'une à l'autre au moyen d'éléments de liaison (32).
